Europäisches Patentamt

European Patent Office

Office européen des brevets

(19)

(11) Publication number: **0 124 206**
**A1**

(12) **EUROPEAN PATENT APPLICATION**

(21) Application number: **84300992.9**

(22) Date of filing: **16.02.84**

(51) Int. Cl.³: **H 01 H 13/52**

(30) Priority: **25.02.83 US 469937**

(43) Date of publication of application: **07.11.84**
**Bulletin 84/45**

(84) Designated Contracting States: **AT BE CH DE FR GB IT LI LU NL SE**

(71) Applicant: **HI-TEK CORPORATION, 7274 Lampson Avenue, Garden Grove California, 92641 (US)**

(72) Inventor: **Bessire, Robert W., 240 LaPaz Street, Anaheim California 92807 (US)**

(74) Representative: **Rushton, Ronald et al, SOMMERVILLE & RUSHTON 11 Holywell Hill, St. Albans Hertfordshire AL1 1EZ (GB)**

(54) **Low profile keyswitch.**

(57) A low profile keyswitch (10) for attachment to a one-sided printed circuit board (62) has contact which laterally spaced prongs (66), (68), (80), (82) for connecting the contacts to more than one conductor (134), (134a), (136), (136a), in the printed circuit board (62) without requiring additional jumper wires. The low profile keyswitch (10) includes a return spring (18) mounted offset from the plunger body (14) and laterally spaced from the switch contacts (64) and (68) to isolate the switch contacts (64) and (68) from wear debris such as from the spring (18). The switch contacts (64), (68) have base portions (65), (79) mounted in parallel, laterally spaced slots (44), (54) in the base of the housing (12) to distribute forces on the contacts to reduce the likelihood of fractures caused by repetitive bending of the contacts (64), (68) as the keyswitch (10) moves between an open and a closed position.

ACTORUM AG

## LOW PROFILE KEYSWITCH

### Background of the Invention

This invention relates generally to electrical keyswitches and, more particularly, to push button keyswitches for electronic devices such as computer terminals, electronics typewriters and calculators. Still more particularly, the invention relates to passive electronic keyswitches.

Computer data entry terminals and electronic typewriters typically comprise several keyswitches mounted within a frame. Ordinary keyswitches typically have a housing, a plunger slidable within the housing and a return spring to bias the plunger away from the housing so that the keyswitch is ordinarily in an open position. The return spring is usually an elongated coil spring having a diameter of about one centimeter or less. A pair of thin metallic switch contacts have upper portions inside the return spring and lower portions extending through the housing for mounting in corresponding holes in the printed circuit board. In a passive keyswitch, the upper portions of the switch contacts act as leaf springs, and the ends are biased against a spreader bar when the switch is open. Thus, the only forces acting to bring the switch contacts together are the spring bias forces. In contrast, an active keyswitch has contacts brought together by a force depending upon the force applied to the key top.

Depressing the plunger into the housing moves the spreader bar away from the ends of the contacts toward the housing so that the spring bias of the contacts brings the ends into electrical contact. The lower portions of the switch contacts may be only 2-3 mm apart. The upper portions may be about 2 cm long, and a typical spreader bar has a thickness of about 1 mm thickness. To assure that the upper contact portions do not touch the return spring, the upper contact portions are about 1-2 mm wide; and the return spring has a diameter of about 5-10 mm.

Keyboard specifications for electronic equipment for sale in many industrialized countries require the keyswitch housing to project not more than 17 mm from the attached printed circuit board. A keyswitch which meets the foregoing specification generally is designated as a "low profile keyswitch".

Forming a low profile keyswitch having the above-described structure necessitates the use of switch contacts which are only about 5-10 mm long. The repetitive bending of such short contacts as the spreader bar moves up and down causes premature failure of the keyswitch, which should be capable of several million cycles in ordinary use.

In addition, the conventional keyswitch structure has the metal return spring so close to the switch contacts that wear debris generated by reciprocal motion of the plunger relative to the housing may adhere to the switch contacts and interfere with proper operation of the switch.

Economical construction of a keyboard requires the use of a printed circuit board having electrical conductors exposed on only one side. Such "one-sided" circuit boards cost about one-third as much as "two-sided" boards. It is often necessary to connect a switch contact to more than one conductor on the printed circuit board. The dimensions of ordinary switch contacts require the use of jumper wires to connect a switch contact to more than one conductor. Installation of jumper wires is time-consuming and expensive, which detracts from the cost advantages of one-sided circuit boards.

Thus, the art exhibits a need for a durable, low profile keyswitch which has switch contacts isolated from the return spring and which may be used on one-sided printed circuit boards without requiring jumper wires for connection of a switch contact to more than one conductor on the circuit board.

0124206

-3-

## Summary of the Invention

Accordingly, the present invention is directed to a low profile keyswitch which overcomes the difficulties associated with prior art keyswitches.

The keyswitch of the present invention comprises a housing, a plunger retained within the housing, and means for connecting first and second switch contacts to the housing. The invention further includes means laterally displaced from the switch contacts for controlling movement of the plunger relative to the housing. The controlling means are offset from the center of the plunger body and from the center of the housing. The first and second switch contacts are also disposed offset to the center of the plunger body in the housing, to the side opposite that in which the control means are disposed. The invention therefore permits isolation of the return spring from the switch contacts, thus preventing metallic whiskers which grow from the spring over a long period of time and wear debris generated by operation of the keyswitch from interfering with switching operations. Having the mounting means laterally displaced from the switch contacts permits the use of a relatively short return spring and permits the switch contacts to be mounted in the housing without having spacing limitations determined by the diameter of the return spring.

Having the switch contacts isolated from the return spring also permits the switch contacts to be large enough so that each switch contact has two prongs which extend through the housing for mounting to a printed circuit board. The prongs of a single switch contact are separated by distance sufficient to permit the passage of one or more conductors on the circuit board therebetween without having electrically conducting contact therewith. Therefore, the present invention obviates the necessity of using jumper wires on a one-sided circuit board.

## Brief Description of the Drawings

Figure 1 is a perspective view of a keyswitch according to the invention positioned for insertion onto a keyboard frame and a printed circuit board;

Figure 2 is a cutaway perspective view of the keyswitch of Figure 1;

Figure 3 is an exploded perspective view of the keyswitch of Figure 1;

Figure 4 is a cutaway perspective view of a portion of a keyswitch housing included in the keyswitch of Figure 1;

Figure 5 is a partial cross sectional view taken along line 5-5 of Figure 2 showing the keyswitch in an open position;

Figure 6 is a partial cross sectional view taken along line 5-5 showing the keyswitch in a closed position;

Figure 7 is a partial cross sectional view taken along line 7-7 of Figure 3;

Figure 8 is a partial perspective view of a second embodiment of a portion of the keyswitch housing;

Figure 9 is a top plan view of the housing of the keyswitch of Figure 3;

Figure 10 is a bottom plan view of the plunger of the keyswitch of Figure 3;

Figure 11 is a cross sectional view taken along line 11-11 of Figure 5; and

Figure 12 is a bottom plan view of the printed circuit board of Figure 1.

## Description of the Preferred Embodiment

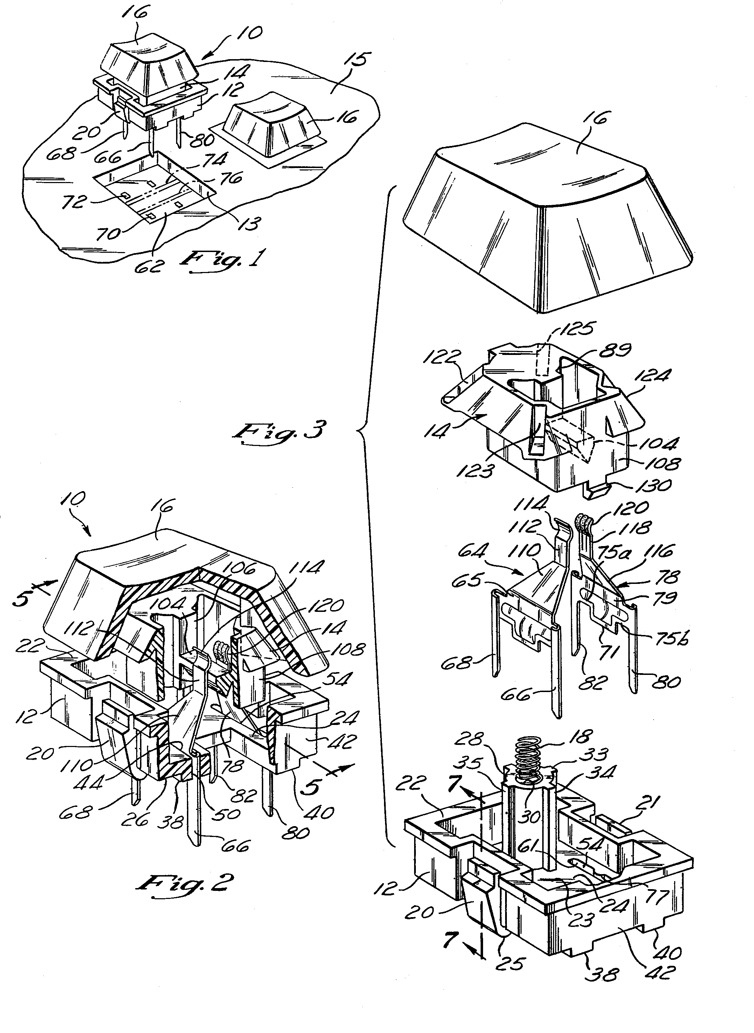

Referring to Figures 1 and 3, a keyswitch 10 according to the invention includes a housing 12, a plunger body 14 slidably mounted within the housing 12 and a key top 16 fixed to the plunger body 14. A return spring 18 positioned between the housing 12 and the plunger body 14 provides means for biasing the plunger body 14 away from the housing 12. The housing 12, the plunger body 14 and the key top 16 are preferably formed of any suitable .

injection molded thermoplastic material. The return spring 18 is preferably formed of any suitable spring steel or similar material.

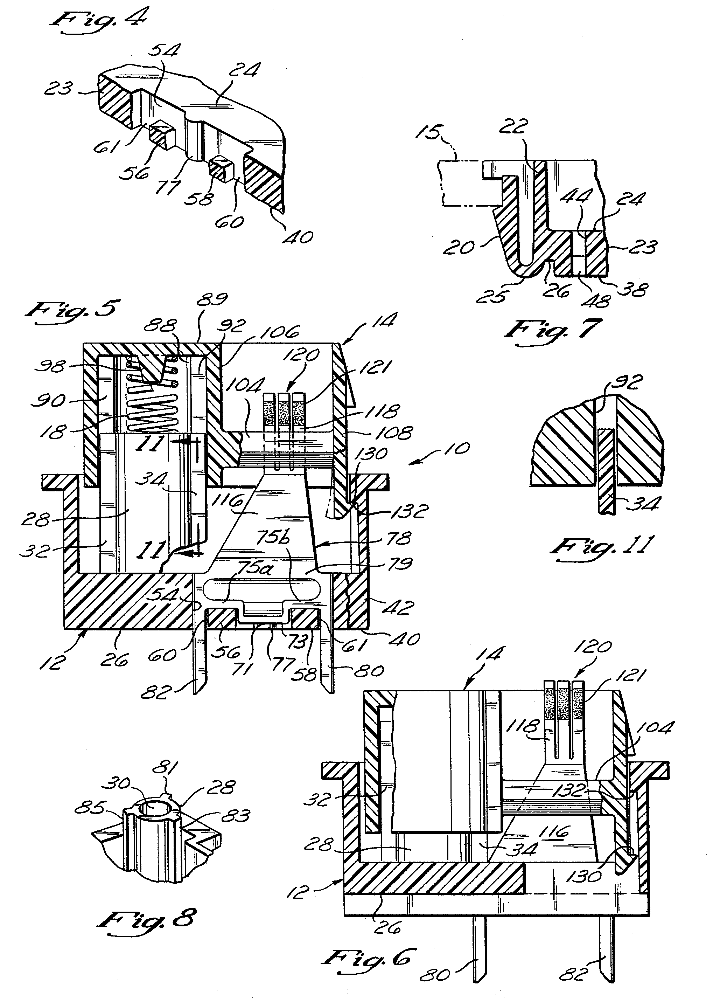

As shown in Figure 1, the housing 12 is dimensioned to fit within a keyswitch opening 13 in a keyboard frame 15. Referring to Figures 1, 3 and 7, the housing 12 includes a pair of snap fasteners 20 and 21 configured to retain the housing 12 within the keyswitch opening 13. Referring to Figures 3 and 7, the housing 12 further includes a wall portion 22, a floor 23 having an inner floor surface 24 and an outer floor surface 26.

As best shown in Figure 7, the snap fastener 20 has a curved portion 25 which depends from and curves below the adjacent wall portions 22 for attachment to the outer floor surface 26 such that the fastener 20 is longer than a fastener which merely extends from the wall portion 22. The fastener 20 must be deformed in order to secure the housing 12 to the keyboard frame 15, and the additional length of the snap fastener 20 provided by the curved portion 25 distributes the forces generated in the required deformation over a length sufficient to reduce the possibility of breakage during connection of the keyswitch 10 to the keyboard frame 15. The snap fastener 21 is substantially identical to the fastener 20.

The housing 12 further includes a projection 28 which extends perpendicularly from the inner floor surface 24. The projection 28 has a cylindrical bore 30 therein and has a plurality of ribs 32-35 extending radially outwardly therefrom.

Referring to Figures 2 and 3, a pair of parallel, elongated, rectangular projections 38 and 40 extend from the outer floor surface 26. The projections 38 and 40 extend from a wall portion 42 of the housing 12 to a position near the ribs 33 and 35. As shown in Figures 2, 3, 4 and 9, a slot 44 extends through the floor 23 and the projection 38. A pair of parallel retainer bars 46 and 48 (Figure 9) extend across the slot 44 to define a pair of openings 50 and 51 through the floor 23. Similarly, a slot 54 through the floor 23 and a pair of parallel retainer bars 56 and 58 form a pair of openings 60 and 61 through the floor 23. As best shown in Figure 4, the retainer bars 56 and 58 are flush with the outer portion of the projection 40 and extend approximately half the distance between the outer portion of the projection 40 and the inner floor surface 24. The retainer bars 46 and 48 positioned within the slot 44 are substantially identical in structure to the retainer bars 56 and 58. A projection 67 extends into the slot 44, and a similar projection 77 extends into the slot 54.

The projections 38 and 40 provide means for positioning the housing 12 upon a printed circuit board 62 (Figure 1). As shown in Figures 2 and 7, the rectangular projections 38 and 40 have outward-facing rectangular surfaces which are approximately flush with the curved portions of the snap fasteners 20 and 21.

Referring to Figure 3, a switch contact 64 has a pair of prongs 66 and 68 which extend through the openings 50 and 51, respectively. Referring to Figure 1, when the housing 12 is mounted to the printed circuit board 62, the prongs 66 and 68 extend through a pair of openings 70 and 72 through the printed circuit board 62 for placement in electrical contact with conductors (not shown) therein.

Referring to Figures 1 and 3, a switch contact 78 has a pair of prongs 80 and 82 which extend through the openings 60 and 61, respectively in the housing 12. The prongs 80 and 82 are positioned in the printed circuit board 62 similarly to the prongs 66 and 68. The pairs of prongs 66, 68 and 80, 82 span a distance sufficient to permit a plurality of conductors, such as the conductors 74 and 76 of Figure 12 (shown in phantom in Figure 1) to pass therebetween while the prongs 66 and 68 are connected to a pair of conductors 134, 134a and 136, 136a, respectively. Thus, the prongs 66, 68 and 80, 82 obviate the necessity of utilizing jumpers (not shown) to connect more than one conductor of the circuit board 62 to the switch contacts 64 and 78, respectively.

As best shown in Figures 3 and 5, the switch contact 78 has a base portion 79 for extending into the slot 54 for mounting the switch contact 78 to the housing 12. The base portion 79 includes a bar 71 which extends between the prongs 80 and 82. The bar 71 has a first portion 73 which is between the retainer bars 56 and 58 when the base 79 is mounted in the slot 54 and a pair of portions 75a and 75b which rest upon the retainer bars 56 and 58, respectively. Therefore, the retainer bars 56 and 58 form a saddle-like configuration for seating the base 79 within the slot 54. The projection 77 deforms the adjacent portions of the base 79 to provide a force for retaining the switch contact 78 within the slot 54. As shown in Figure 5, the base portion 79 preferably does not pass completely through the projection 40 because it is generally desired that only the prongs 80 and 82 of the switch contact 78 come in contact with the circuit board 62. The retainer bars 56 and 58 and the projection 77 align and retain the switch contact 78 so that the prongs 80 and 82 are approximately perpendicular to the housing floor 23 when the keyswitch 10 is assembled.

As best shown in Figure 3, the switch contact 64 has a base section 65 for extending into the slot 44 for mounting the switch contact 64 to the housing 12. The retainer bars 46, 48 and the projection 67 align and retain the switch contact 64 in the slot 44 in a manner similar to that in which the retainer bars 56, 58 and the projection 77 aligns and retains the switch contact 78 in the slot 54.

Referring to Figure 10, the plunger body 14 includes a generally cylindrical cavity 88 formed by projection 89 extending along the height of the plunger body 14, the projection and the cavity defined thereby have a plurality of accurately spaced slots 90-93 extending radially therefrom. The slots 90-93 are configured to receive the ribs 32-35, respectively, therein when the plunger body 14 is mounted to the housing 12 to control movement of the plunger body 14 relative to the housing 12. The cavity 88 has an end closure 96, which preferably includes a projection 98 extending therefrom in axial alignment with the cavity 88.

Referring to Figures 9, 10, and 11, the dimensions of the projection 28 and the cavity 88 are preferably such that the plunger body 14 rides on the sides of the ribs 32-35 with no sliding contact occurring between the facing arcuate portions of the projection 28 and the cavity 88. The clearance between the sides of the ribs 32-35 and the facing walls of the slots is preferably controlled to be within the range of 0.001-0.002 inch. Sliding movement of two close fitting, concentric cylinders is facilitated by having the length-to-diameter ratio of the contacting surfaces be as large as possible. A high length-to-diameter ratio prevents binding and variable frictional forces caused by slight axial misalignment of such cylinders. The only contact between the plunger body 14 and the housing 12 occurs between the ribs 32-35 and the corresponding slots 90-93. Figure 11 shows the overlapping portions of the rib 34 and the slot 92 which are in contact when the keyswitch 10 is in the open position of Figure 5. The length of the overlapping portions is preferably large relative to the thickness of the rib 34. The ratio of contact length to rib thickness is preferably at least 2.0. The present invention is suitable as a low-profile keyswitch because all of the slots 90-93 and the corresponding ribs 32-35 may conveniently have widths which are small in relation to the lengths in contact when the keyswitch 10 is in the open position. Therefore, the ribs 32-35 and the slots 90-93 cooperate to give the effect of a relatively large length-to-diameter ratio although the length and diameter dimensions may be approximately the same. Having the effect of a large length-to-diameter ratio is particularly advantageous in the present invention because the projection 28 and the cavity 88 are not centered in the housing 12 and plunger body 14, respectively, which could tend to inhibit free sliding movement between the plunger body 14 and the housing 12.

The spring 18 preferably has an elongated coiled configuration; and a first end of the spring 18 fits within the cylindrical bore 30, where a portion of the inner floor portion 24 retains the end of the spring 18 against axial movement relative to the housing 12. When the plunger body 14 is mounted to the housing 12 with the spring 18 positioned within the bore 30, a second end of the spring 18 fits around the projection 98. The diameter of the cavity 88 must be sufficiently large to accommodate sliding movement of the projection 28 therein. Therefore, the diameter of the cavity 88 is generally larger than the diameter of the spring 18. The projection 98 retains the end of the spring 18 against radial movement within the cavity 88 to assure linear contraction and expansion of the spring 18 as the plunger body 14 moves relative to the housing 12. Any appreciable bending of the spring 18, rather than the desired linear contraction, upon movement of the projection 28 into the cavity 88 could cause the spring 18 to rub against the interior walls of the cavity 88, thereby generating undesirable wear debris and causing the keyswitch 10 to have an incorrect "feel" to an operator.

Referring to Figures 2, 3 and 10, a spreader bar 104 extends between a wall portion 106 of the cavity 88 and a wall portion 108 of the plunger body 14. As best shown in Figure 3, the switch contact 64 includes a generally trapezoidal portion 110 which extends from the base region 65 into the plunger body 14. A generally rectangular portion 112 of the switch contact 64 extends from the trapezoidal portion 110 and bears against the spreader bar 104. A generally semicylindrical, unitary contact portion 114 extends from the rectangular portion 112 beyond the spreader bar 104 when the switch contacts 64 and 78 are in an open position of Figure 2.

As shown in Figures 2, 5 and 6, the switch contact 78 includes a generally trapezoidal portion 116 and a generally rectangular portion 118, which are similar to the trapezoidal portion 110 and the rectangular portion 112, respectively. The switch contact 78 includes a preferably trifurcated, generally semicylindrical contact portion 120, which extends beyond the spreader bar 104 when the keyswitch 10 is in the open position as shown in Figure 2. The spreader bar 104 separates the contact portions 114 and 120 when the keyswitch 10 is in the open position with the plunger body 14 being withdrawn from the housing 12 as best shown in Figures 2 and 5. The trapezoidal portions 110 and 116 and the rectangular portions 112 and 120 act as leaf springs to urge the rectangular portions 112 and 118 against the spreader bar 104 when the keyswitch 10 is open and to urge the contact portions 114 and 120 in contact when the keyswitch 10 is closed.

Depression of the plunger body 14 toward the housing 12 to the position shown in Figure 6 moves the spreader bar 104 from between the rectangular portions 112 and 118 into the region between the trapezoidal portions 110 and 116. The distance between the slots 44 and 54 to which the base portions 65 and 79 of the switch contacts 64 and 78, respectively, are attached is greater than the thickness of the spreader bar 104 which separates the rectangular portions 112 and 118 when the keyswitch 10 is open.

Referring to Figures 5 and 6, the semicylindrical trifurcated portion 120 has a contact portion 121 preferably coated or inlaid with a high conductivity substance such as gold. The semicylindrical portion 114 may be similarly gold coated to provide maximum conductivity when the keyswitch 10 is closed. The remainder of the switch contacts 64 and 78 is preferably comprised of copper. The trifurcated contact portion 120 insures reliable switching even if a small piece of foreign material, such as dust or wear debris, should become lodged on one of the contact portions 114 and 120. The contact portion 120 is sufficiently flexible that switching may be achieved even if one or two of the three portions of the contact portion 120 are insulated from the contact portion 114.

The spring 18 and the contact portions 114 and 120 are laterally spaced apart with the spring 18 being preferably entirely contained in the cavity 88 and bore 30, as best shown in Figure 5, even when the keyswitch 10 is in the open position. It is well known that under long term use, metal springs exhibit growth of metallic whiskers from the metal surface. Such metallic whiskers may become separated from the spring and contribute conductive material to the wear debris, which could cause undesired conduction between the contact portions 114 and 120. Sliding contact of the plastic portions of the keyswitch 10 contributes non-conductive material to the wear debris, which could insulate the contact portions 114 and 120 from one another. Therefore, the switch contact portions 114 and 120 are advantageously shielded from wear debris from the spring 18 and adjacent portions of the plunger body 14 and the housing 12 which are in sliding contact.

Having the bases 65 and 79 of the switch contacts 64 and 78, respectively, mounted farther apart than the thickness of the spreader bar 104, as shown in Figure 2, enhances the durability of the keyswitch 10. Ordinary passive keyswitches (not shown) have switch contacts mounted close together inside a generally cylindrical return spring. The contacts of such switches are more prone to fatigue-induced fractures at the mounting points than are the switch contacts 64 and 78 mounted as disclosed herein, which spread forces on the contacts along the lengths of the slots 44 and 54, respectively.

The trapezoidal portions 110 and 116 are angled from the slots 44 and 54, respectively, toward the spreader bar 104, which permits the switch contacts 64 and 78 to be made longer than would be possible if they extended away from the spreader bar in essentially parallel alignment. The bending moments applied to the switch contacts 64 and 78 increase from the rectangular positions 112 and 118 to the bases 65 and 79, respectively. The trapezoidal portions 110 and 116 thus distribute forces applied to the switch contacts 65 and 79 over lengths which increase as the bending moment increases. Therefore, the spring forces in the switch contacts 64 and 78 are distributed over lengths sufficient to provide adequate spring bias forces without overstressing the material which comprises the switch contacts 64 and 78.

Another advantage obtained by having the spring 18 mounted spaced apart from the switch contact 64 and 78 is the elimination of the risk of damaging the switch contacts 64 and 78 during assembly of the keyswitch 10. Assembly of conventional keyswitches requires the compression of an elongated return spring around the switch contacts; and it is possible for coils of the return spring to become entangled with the switch contacts during such compression. Assembly of the keyswitch 10 according to the invention requires the alignment of the spreader bar 104 between the semicylindrical contact portions 114 and 120. The triangular cross section of the spreader bar 104 (Figure 2) facilitates such alignment and minimizes the risk of damage to the switch contacts 64 and 78.

As shown in Figures 3 and 10, the plunger body 14 further includes a plurality of recesses 122-125 therein to provide means for mounting the keytop 16 to the plunger body 14. The plunger body 14 may conveniently have a rectangular or square cross section with the recesses 122-125 being formed at the corners thereof. The keytop 16 has corresponding projections (not shown) which are engagable with the recesses 122-125 to retain the keytop 16 in connection with the plunger body 14.

Referring to Figures 5 and 6, a retainer 130 projects from the plunger body 14 for engagement with a shoulder 132 inside the wall portion 42. The spring 18 urges the retainer 130 against the shoulder 132 when the keyswitch 10 is in the open position. The shoulder 132 projects from the wall portion 42, which has been undercut, so that the retainer 130 preferably does not contact the wall portion 42 as the plunger body 14 moves against the bias of the spring 18 into the housing 12. Therefore, the retainer 130 and the shoulder 132 cooperate to retain the plunger body 14 upon the housing 12 without causing undesirable frictional forces and unnecessary generation of wear debris during normal operation of the keyswitch 10.

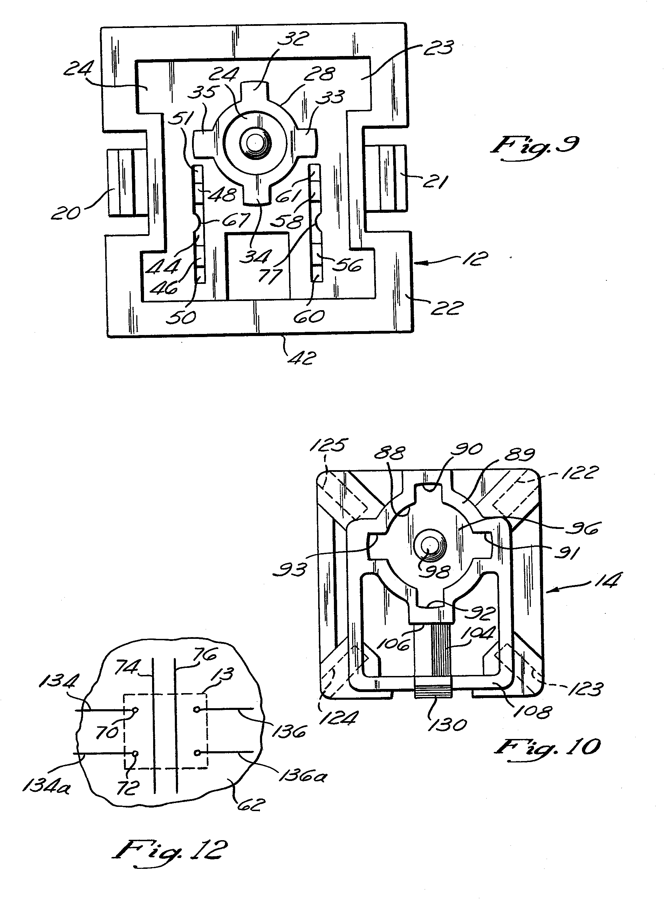

Figure 8 shows an embodiment of the projection 28 which includes three ribs 81, 83 and 85 extending therefrom for guiding sliding movement of the plunger body 14 relative to the housing 12. When the projection 28 has the three ribs 81, 83 and 85, the cavity 88 must have three corresponding slots (not shown) to mate with the ribs 81, 83 and 85. The three ribs as shown permit the plunger body to have a plurality of retention tabs (not shown) such as the retention tab 130.

The plunger body 14 has a range of movement between the shoulder 132 and the housing floor 23 adequate for the spreader bar 104 to move between the trapezoidal sections 110 and 116 to permit the spring forces in the switch

0124206

-14-

contacts 64 and 78 to move the unitary portion 114 and the trifurcated portion 120 into electrical contact. Thus, there is a camming action between the spreader bar 104 and the contacts 64 and 78 as the spreader bar moves between the open and closed positions.

WHAT IS CLAIMED IS:

1. A low profile keyswitch (10) for attachment to a plurality of electrical connectors (134), (134a), (136), (136a) in a printed circuit 62 comprising:

housing (12) having a housing projection (28) extending therefrom;

a return spring (18) engaging the housing projection (28);

first and second switch contacts (64) and (78) mounted within the housing (12) displaced from the housing projection (28) and biased to contact one another; and

a plunger body (14) adapted for guided vertical movement relative to the housing (12), the plunger body (14) comprising a plunger body projection (89) adapted to engage return spring (18) and to slidably engage the housing projection (28) such that the spring is fully encased by at least one of the housing projection (28) and the plunger body projection (89), the keyswitch being characterized in that the plunger body projection (89) is offset from the center of the plunger body (14).

2. The keyswitch of Claim 1 wherein said plunger body (14) includes a second projection (98) inside said plunger body projection (89), said second projection (98) being engagable with an end of said return spring (18) to retain the end of said return spring against lateral movement within plunger body projection (89).

3. The keyswitch of Claim 1 further comprising a plurality of ribs (32)-(35) extending radially from said housing projection (89), said plunger body (14) including a plurality of slots (90)-(93) for receiving said ribs therein, said ribs (32)-(35) being slidable within said slots (90)-(93) to permit motion of said plunger body (14) relative to said housing (12).

4. The keyswitch of Claim 1 wherein said first switch contact (64) includes a first base portion (65) and said second switch contact (78) includes a second base portion (79), and wherein at least one of said first and second switch contacts includes a pair of laterally spaced prongs (66), (68), (80), (82) extending from the corresponding base portion through said housing (12) and adaptable for connection to a printed circuit board (62), said prongs (66), (68), (80), (82) being separated by a distance sufficient to permit at least one electrical conductor (74), (76) to pass therebetween without making electrical contact with either of said prongs.

5. The keyswitch of Claim 4 wherein said housing (12) has a first slot (44) therein for receiving said first base portion (65) and a second slot (54) for receiving said second base portion (79), said first and second slots each having corresponding retainer means (46), (48), (56), (58) for retaining said first and second base portions, respectively, therein and for preventing said first and second base portions (65), (79) from penetrating completely through said housing (12).

6. The keyswitch of Claim 5 wherein said slots (90)-(93) and said ribs (32)-(35) include opposing surface portions that form the sole frictional surfaces between said housing (12) and said plunger body (14).

7. The keyswitch of Claim 1 wherein said first and second switch contacts (64) and (78) are laterally displaced from the housing projection (28).

8. The keyswitch of Claim 1 wherein the first and second switch contacts (64) and (78) are laterally displaced from the center of the housing (12) to the side opposite the housing projection (28).

9. The keyswitch of Claim 1 wherein the housing projection (28) forms a hollow, generally cylindrical member.

-17-

10. The keyswitch of Claim 9 wherein the plunger projection (89) forms a hollow, generally cylindrical member.

11. The keyswitch of Claim 10 wherein the housing projection (28) is adapted to fit within the plunger projection (89).

Fig. 1

Fig. 2

Fig. 3

Fig. 4

Fig. 7

Fig. 5

Fig. 11

Fig. 8

Fig. 6

0124206

*Fig.9*

*Fig.10*

*Fig.12*

# EUROPEAN SEARCH REPORT

Application number

EP 84 30 0992

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-3 111 407 (MARQUARDT)<br><br>* Page 14 - page 16, line 2; figures 1,2 * | 1,2,7, 8 | H 01 H 13/52 |
| Y | DE-A-2 753 678 (DEKORSY)<br>* Claim 1; figures 1-3 * | 1 | |
| A | US-A-4 361 743 (R.D. AYERS)<br>* Column 2, lines 31-62; figure 3 * | 1,9-12 | |
| A | WO-A-8 001 018 (TWYFORD)<br>* Page 3, line 22 - page 4, line 1; figure 3 * | 1 | |
| A | US-A-3 378 663 (M.H. ABROMOWITZ) | | TECHNICAL FIELDS SEARCHED (Int. Cl. 3)<br><br>H 01 H 13/00<br>H 01 H 15/00<br>H 01 H 1/00 |

The present search report has been drawn up for all claims

| Place of search | Date of completion of the search | Examiner |
|---|---|---|
| THE HAGUE | 06-06-1984 | TOUSSAINT F.M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82